# EUROPEAN PATENT APPLICATION

(11) **EP 4 461 460 A1**
(43) Date of publication of application: **13.11.2024**
(21) Application number: 24174001.8
(22) Date of filing: 03.05.2024
(51) Int. Cl.: B23Q 39/02, B23B 3/32, B23Q 39/04, B23Q 39/00

(54) **A NUMERICALLY CONTROLLED MULTI-SPINDLE LATHE**

(30) Priority: 11.05.2023 IT 202300009363
(71) Applicant: PAOLINO BACCI S.R.L., 56021 Cascina (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(57) **Abstract**

The lathe comprises pairs of headstocks and tailstocks (15; 113,115; 213, 215) configured to rotate workpieces (P) around respective rotation axes (A). A first support structure (23, 25; 123, 125; 223, 225) supports a plurality of first spindles (31; 131; 231) with rotation axes parallel to each other and adapted to rotate tools (U) configured to machine pieces (P) mounted between each pair of headstocks (13; 113; 213) and tailstocks (15; 115; 215). An additional workhead (51; 151; 251) comprises at least one additional spindle (53; 153; 253), movable with respect to the pairs of turning members (13, 15; 113, 115; 213, 215) according to a plurality of numerically controlled axes independent of the first numerically controlled translation axis (X).

## Description

### TECHNICAL FIELD

The present invention relates to the field of machine tools. More in particular, the invention relates to the field of numerical control lathes.

### PRIOR ART

For the production of elongated pieces, such as components of furniture or other, in wood, plastic, light alloys or the like, the use of numerical control lathes and copy lathes is known. In particular, for the production of furniture components, such as chair and table legs, multi-spindle copy lathes are known, in which it is possible to simultaneously machine a plurality of pieces supported by a plurality of headstocks and tailstocks. The tools which machine the plurality of pieces in parallel are controlled by means of a template, which reproduces the shape of the piece to be manufactured. In practice, these lathes comprise a plurality of pairs of headstocks and tailstocks to rotate a plurality of pieces around respective rotation axes which are parallel to each other. The headstock and tailstock pairs are associated with tool-holder spindles on which can be mounted tools adapted to machine the side surface of the pieces kept in rotation around the axes of the headstocks and tailstocks. In known embodiments, the machines comprise a spindle for each headstock and tailstock pair, or in some cases a spindle for two headstock and tailstock pairs for machining two contiguous pieces with a single tool. In some cases there is a group of auxiliary spindles each associated with a headstock and tailstock pair. The tools are adapted to machine the side surfaces of the pieces while they rotate around the rotation axes of the respective headstock and tailstock pairs.

Multiple numerically controlled lathes for the parallel processing of several pieces rotated between headstock and tailstock pairs are disclosed in ES2578369, EP3858542 and EP4043146.

These machine tools have high productivity, but still suffer from some limitations, in particular regarding the type of machining which can be performed on the pieces.

It would therefore be useful to provide numerically controlled lathes with a plurality of headstock and tailstock pairs capable of performing more extensive machining cycles and thus having a greater machining flexibility and performing several different machining operations on each individual piece.

### SUMMARY

A multi-spindle lathe according to the invention is defined in claim 1. Further embodiments and features are defined in the dependent claims.

Substantially, various embodiments of a numerically controlled multi-spindle lathe are described herein, which comprises a plurality of pairs of turning members configured to rotate workpieces around respective rotation axes. Each pair of turning members comprises a headstock and a tailstock which are coaxial with each other and define the respective rotation axis of the workpieces. The rotation axes of the pairs of turning members are parallel to each other. Furthermore, each headstock is motorized and the distance between headstocks and tailstocks is adjustable. The lathe further comprises a first support structure, on which a plurality of first spindles are arranged with rotation axes parallel to each other and adapted to rotate tools configured to machine pieces mounted between each headstock and tailstock pair. The first spindles can advantageously machine all the pieces mounted on headstocks and tailstocks simultaneously.

For this purpose, the first spindles and the pairs of turning members are movable with respect to each other along a first numerically controlled translation axis parallel to the rotation axes of the pairs of turning members. Advantageously, a second numerically controlled motion is provided between the first spindles and the pairs of turning members along a second numerically controlled translation axis, for example orthogonal to the first numerically controlled translation axis.

In some embodiments, the rotation axes of the headstock and tailstock pairs are arranged on a plane, for example a vertical plane. The first spindles can be arranged with their rotation axes parallel and coplanar to each other on a vertical plane, parallel to the lying plane of the rotation axes of the headstocks and tailstocks. The spindles and the headstock and tailstock pairs are movable with respect to each other along a first numerically controlled translation axis parallel to the rotation axes of the headstocks and tailstocks and along a second numerically controlled translation axis orthogonal to the first axis and orthogonal to the lying plane of the rotation axes of the headstocks and tailstocks.

In other embodiments, the rotation axes of the headstock and tailstock pairs are arranged on a horizontal plane. The first spindles can be arranged with their rotation axes parallel and coplanar to each other on a horizontal plane, parallel to the lying plane of the rotation axes of the headstocks and tailstocks. The spindles and the headstock and tailstock pairs are movable with respect to each other along a first numerically controlled translation axis parallel to the rotation axes of the headstocks and tailstocks and along a second numerically controlled translation axis orthogonal to the first numerically controlled axis and orthogonal to the horizontal lying plane of the rotation axes of the headstocks and tailstocks.

The lathe further comprises an additional workhead, comprising at least one additional spindle, movable with respect to the pairs of turning members according to a plurality of numerically controlled axes independent of the first numerically controlled translation axis.

Advantageously, the additional workhead is provided with a numerically controlled motion which allows an additional spindle of the additional workhead to selectively machine any one of the workpieces mounted any one of the various headstock and tailstock pairs. In essence, therefore, the additional workhead comprises a compact structure with a limited number of spindles (for example a single spindle, or a pair of coaxial and opposite spindles), with which it is possible to machine all the pieces mounted on the headstocks and tailstocks.

In practice, the additional workhead is movable along guides of sufficient length to bring the additional workhead, or the respective spindle thereof, alongside any of the rotation axes defined by the headstock and tailstock pairs.

In some embodiments, the additional workhead is movable along two numerically controlled translation axes, which do not coincide with each other and are preferably orthogonal to one another. Such motions can be given to the additional workhead with respect to a fixed structure on which the headstocks and tailstocks of the workpieces are carried. The additional workhead and the workpieces (or the turning members of the workpieces) are provided with a translation motion along a further numerically controlled translation axis, preferably orthogonal to the numerically controlled translation axes mentioned above. This motion can be assigned to the additional workhead or to the headstock and tailstock pairs.

In advantageous embodiments, the additional workhead is also movable around a numerically controlled rotary axis.

The additional workhead allows to carry out, on each piece, and always using the same spindle brought by the head, a plurality of further machining operations, which cannot be carried out by the main rotating spindles, which are parallel to each other and controlled to machine all the pieces simultaneously.

Further advantageous embodiments and features of the lathe according to the invention are defined in the attached claims and described below with reference to the attached drawings.

"Vertical" in the present context means a direction parallel to the direction of the force of gravity, while "horizontal" means a direction orthogonal to the direction of the force of gravity. In the present description and in the attached claims, the indications "vertical" and "horizontal" refer to the condition in which the multi-spindle lathe is in the working position. The orientations of the lathe components in space refer to the position taken by the lathe in operating conditions, i.e., in the working position.

In the present description and in the attached claims, both the numerically controlled axis and the direction along which a given element moves under the control of the respective numerically controlled axis are indicated with the same reference. Thus, for example, X indicates both the direction of physical motion of a specific component of the machine, and the numerically controlled axis which controls such motion.

### BRIEF DESCRIPTION OF THE DRAWINGS

The invention will be better understood by following the description and the attached drawings, which illustrate an exemplary and non-limiting embodiment of the invention. More in particular, the drawings show in:
Fig.1 a front view of a numerically controlled multi-spindle lathe in an embodiment;
Fig.2 a view according to II-II of Fig. 1;
Fig.3 a section according to III-III of Fig.2;
Fig.4 a section according to IV-IV of Fig. 1;
Fig.4A is a section similar to Fig.4 with a modified additional workhead;
Fig. 5 a section according to V-V of Fig. 1;
Fig.6 a front view of a numerically controlled multi-spindle lathe in a second embodiment;
Figs.7 and 8 sections according to VII-VII and VIII-VIII of Fig.6;
Fig.9 a plan view according to IX-IX of Fig.6;
Fig.10 a section according to X-X of Fig.9;
Fig.11 a front view of a numerically controlled multi-spindle lathe in a third embodiment;
Figs.12 and 13 sections according to the lines XII-XII and XIII-XIII of Fig. 11;
Fig.14 a plan view according to XIV-XIV of Fig.11;
Fig.15 a section according to XV-XV of Fig.14;
Fig.16 a front view of a numerically controlled multi-spindle lathe in a fourth embodiment;
Figs.17 and 18 sections according to the lines XVII-XVII and XVIII-XVIII of Fig.16;
Fig.19 a plan view according to XIX-XIX of Fig. 16;
Fig.20 a section according to XX-XX of Fig. 19;
Fig.21 a side view of a numerically controlled multi-spindle lathe in a fifth embodiment;
Fig.22 a plan view according to XXII-XXII of Fig.21;
Fig.23 a side view of a numerically controlled multi-spindle lathe in a sixth embodiment; and
Fig.24 a plan view according to XIV-XIV of Fig.23.

### DETAILED DESCRIPTION

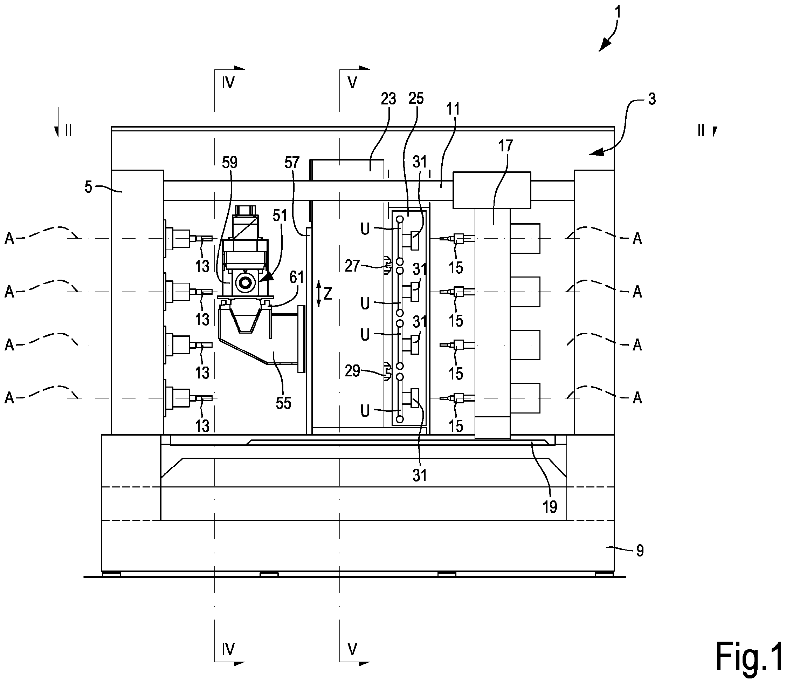

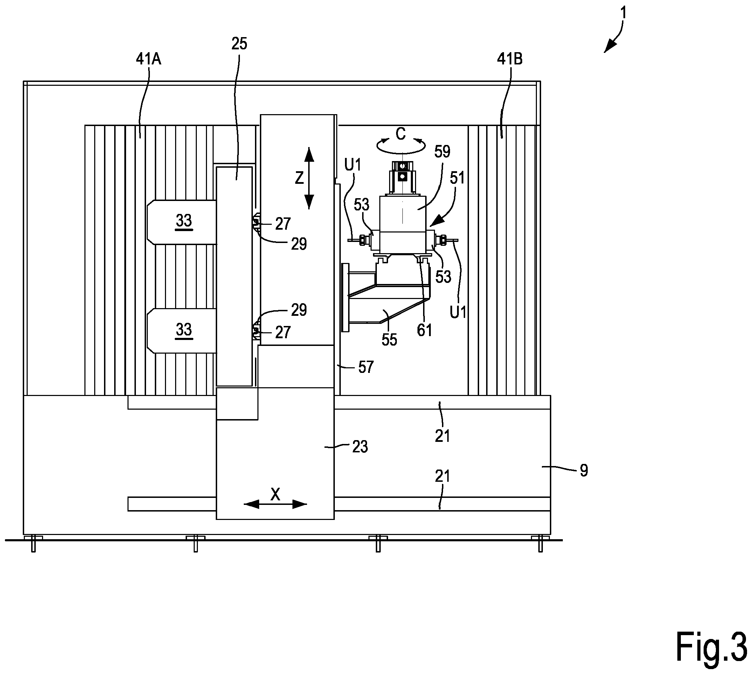

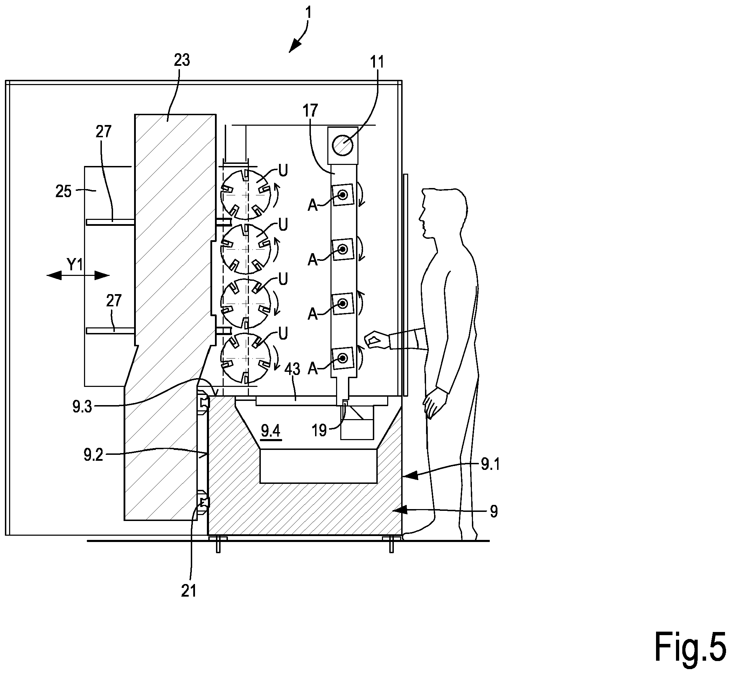

### Embodiment of Figures 1 to 5

Figures 1 to 5 illustrate a first embodiment of a numerically controlled multi-spindle lathe according to the present disclosure. The lathe is indicated with 1 and comprises a load-bearing structure 3. In the illustrated embodiment, the load-bearing structure 3 extends vertically and comprises a first vertical upright 5 and a second vertical upright 7, rigidly connected to a lower horizontal base 9. The uprights 5 and 7 are joined by a horizontal cross member 11 at the top.

The lathe 1 comprises a plurality of pairs of turning members for rotating workpieces P. Each pair of workpiece turning members of the comprises a headstock and a tailstock, coaxial with each other, at least one of which is motorised.

In the illustrated embodiment, a plurality of headstocks 13 are carried on the upright 5. Each headstock is associated with a tailstock 15 coaxial with the headstock 13. The rotation axes of the headstock and tailstock pairs are indicated with A, i.e., of the support and rotation members of workpieces P.

In the illustrated embodiment, the pairs of headstocks and tailstocks 13, 15 are placed vertically side by side on top of each other. The rotation axes A of the pairs of headstocks 13 and tailstocks 15 are coplanar and the lying plane of the axes A is, in this embodiment, a vertical plane.

The possibility of arranging the headstock and tailstock pairs side by side horizontally is not excluded, so that the rotation axes of the headstocks and tailstocks, and thus of the workpieces, are coplanar on a horizontal plane, or on a plane which is inclined with respect to the horizontal plane by an angle less than 90°.

In the illustrated embodiment, each headstock 13 rotates around the respective axis A under the control of a numerically controlled motor, not shown. The motors of the headstocks 13 are preferably controlled so that all the headstocks 13 rotate synchronously. Thereby, a plurality of tools U carried by a plurality of spindles 31 (described in more detail hereinafter) can synchronously and simultaneously machine all the pieces P supported and rotated by the pairs of headstocks and tailstocks 13, 15. In the illustrated embodiment, the tools U, and thus the spindles 31 carrying them, rotate around axes parallel to the rotation axes A of the headstocks 13 and tailstocks 15, i.e., horizontal axes parallel to each other and vertically overlapping.

The rotation axes A of the workpieces P and the rotation axes of the tools U and the spindles 31 are parallel to a first numerically controlled translation axis X. The spindles 31 and the tools U translate under the control of the numerically controlled axis X along the direction X parallel to the axes A around which the workpieces P rotate.

In the illustrated embodiment, the rotation axes of the tools U and the spindles 31 are coplanar and lie on a vertical plane parallel to the lying plane of the rotation axes A of the workpieces P.

In the illustrated embodiment, the motion along the first translation axis X is given to the tools U, while headstocks 13 and tailstocks 15 remain stationary with respect to the load-bearing structure. The possibility is not excluded that the motion along the first numerically controlled translation axis X is given to the pairs of turning members, i.e., to the headstock 13 and tailstock 15 pairs, while the tools U and the spindles 31 remain in a stationary position with respect to the load-bearing structure. In other embodiments the motion along the first numerically controlled translation axis X can be assigned in combination to the headstock 13 and tailstock 15 pairs and to the tools U.

Furthermore, the rotation axes of the tools U and thus of the spindles 31 carrying them, are orthogonal to a second numerically controlled translation axis Y1, along which the tools U move. In the illustrated embodiment, the second numerically controlled translation axis Y1 is orthogonal to the rotation axes A and thus to the first numerically controlled translation axis X and to the vertical lying plane of the rotation axes A of the workpieces P.

The motion of the tools U and the spindles 31 along the second numerically controlled translation axis Y1 can be controlled by means of independent actuators, one for each spindle 31. In the illustrated embodiment, motion along the second numerically controlled translation axis Y1 is imparted simultaneously to all the spindles 31 by means of a single actuator. For this purpose, it is envisaged that all the spindles 31 are carried by a common slide, as described below.

The shape and arrangement of the spindles 31 with the respective tools U, and of the headstocks 13 and tailstocks 15 is such that machining of the pieces P occurs with the aforesaid orientation (rotation axes of the tools U parallel to the rotation axes A of the headstocks 13 and of the tailstocks 15 and thus to the rotation axes of the workpieces P). In other words, the arrangement allows the pieces and the tools to cooperate with one another while the axes A are parallel to the rotation axes of the tools U and of the spindles 31 carrying them. In other embodiments, the rotation axes of the tools U can be orthogonal to the rotation axes A of the workpieces P. In still other embodiments, the inclination of the rotation axes of the tools U and the spindles 31 can be variable, for example with a rotation around a numerically controlled rotary axis.

The tailstocks 15 are carried by a support member which allows the motion thereof in a direction parallel to the first numerically controlled translation axis X and to the rotation axes A to adjust the distance between headstocks 13 and tailstocks 15. In the embodiment illustrated herein, the support member comprises a vertically extending movable upright 17. The movable upright 17 can be guided along upper adjustment guides carried by the cross member 11 and by lower adjustment guides 19, which can preferably be integral with the base 9, extending in the direction of extension of the base 9, i.e., parallel to the axis X. It is thereby possible to adapt the distance between all the headstocks 13 and the respective tailstocks 15 to the length of the workpieces P.

In the illustrated embodiment, the headstocks 13 and tailstocks 15 remain stationary during the machining of the pieces P, in the sense that they do not move along the first numerically controlled translation axis X. In fact, such motion is given to the spindles 31 in the manner described below. However, as mentioned above, the possibility of placing the spindles 31 on a load-bearing structure which is stationary in the direction X and moving the pairs of headstocks 13 and tailstocks 15 along such a direction is not excluded. In such a case the headstocks 13, similarly to the tailstocks 15, will be supported on a respective uprights movable along the motion direction X controlled by the first numerically controlled translation axis. The uprights will be movable with respect to each other to regulate the mutual distance between headstocks 13 and tailstocks 15 so as to adapt it to the longitudinal dimension of the workpieces P; furthermore, headstocks 13 and tailstocks 15 will be movable along the direction X according to the first numerically controlled translation axis with a synchronous movement. For this purpose, it is possible, for example, to envisage that the uprights that carry the headstocks and tailstocks are in turn mounted on a carriage or slide guided along guides parallel to the direction of motion according to the first numerically controlled axis X.

In the illustrated embodiment, in which headstocks 13 and tailstocks 15 are fixed during machining, the base 9 comprises guides on which an upright carrying the spindles 31 translates. The guides are parallel to the numerically controlled translation axis X.

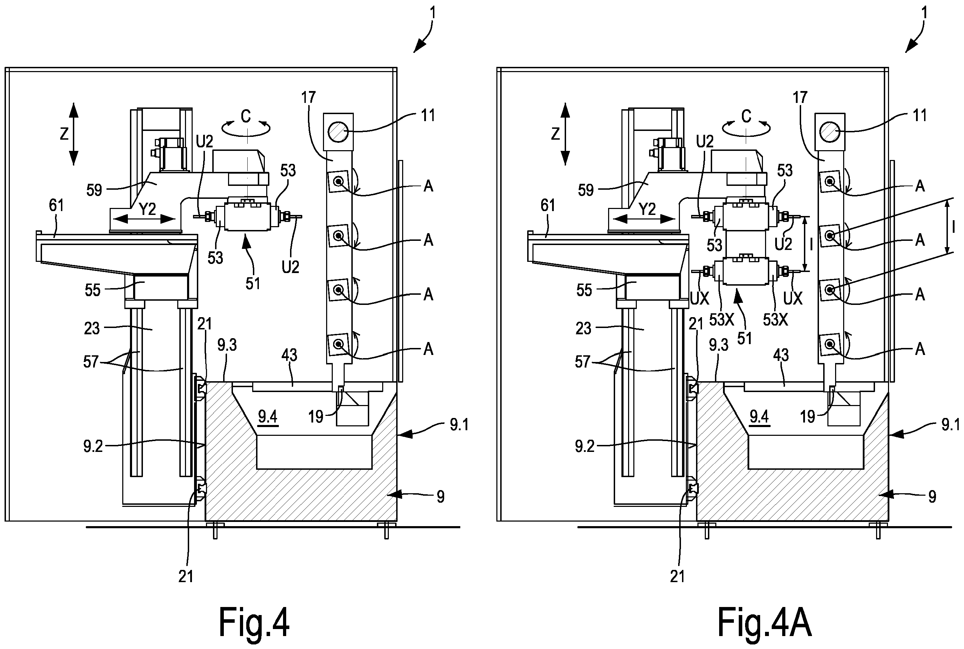

More in particular, in the illustrated embodiment, the base 9 has two side walls or faces 9.1 and 9.2 (see Fig.4) and an upper face 9.3. Guides are fixed on one, the other or both side faces for the translation of an upright carrying the spindles 31 and the related tools U. In the illustrated embodiment, guides 21 are applied to the side face 9.2 and extend according to a first translation direction, represented by the first numerically controlled horizontal translation axis X. A movable upright 23 is engaged to the guides 21. The movable upright 23 can translate along the guides 21 according to the first numerically controlled horizontal translation axis X. The movable upright 23 extends vertically beyond the upper face 9.3 of the base 9.

The movable upright 23 carries a first carriage or slide 25, which is movable along a second translation axis represented by the double arrow Y1 under the control of the second numerically controlled translation axis Y1.

The movable upright 23 with the slide 25 therefore forms a support structure of the spindles 31.

The direction of motion along the second numerically controlled translation axis Y1 is horizontal and orthogonal to the direction of motion along the first numerically controlled translation axis X. To allow the motion along the second numerically controlled translation axis Y1, the first slide 25 is provided with second guides 27, which in the illustrated embodiment engage in pads 29 integral with the movable upright 23.

The spindles 31 are carried on the first slide 25 and the tools U can be applied thereto. In the illustrated embodiment, the number of spindles 31 and the number of tools U is equal to the number of pairs of headstocks 13 and tailstocks 15. In the illustrated example, four headstock and tailstock pairs 13, 15 and four spindles 31 are provided. The number of spindles 31 and pairs of turning members 13, 15 is by way of example.

The spindles 31 can be rotated simultaneously by means of motors in the same or different number with respect to the number of spindles 31. In the illustrated embodiment two motors 33 are provided, each of which rotates two spindles 31.

Thanks to the motions along the numerically controlled translation axes X and Y1 described above, the tools U can perform numerically controlled motions along the axis X to machine each point of the pieces P held between the headstocks 13 and the tailstocks 15. The numerically controlled motion along the translation axis Y1 allows the tools U to be approached and distanced with respect to the side surface to be turned of the pieces P held between t headstocks 13 and tailstocks 15.

According to some advantageous embodiments, to obtain regular and efficient operation of the numerically controlled multi-spindle lathe 1, a protective wall 41 is provided, preferably a flexible wall, for example a bellows wall. The wall 41 is divided into several portions, for example two portions 41A, 41B constrained to movable profiles 41A, 42B, so that two wall portions 41A, 41B define a vertically developing slot for the passage of the first slide 25 and in particular of the tools U, and the approaching and distancing of the tools U with respect to the workpieces P and possibly also to allow an additional workhead (described below) to reach the workpieces. The two wall portions 41A, 41B can for example be made in the shape of bellows. Alternatively, flexible walls can be used which wind and unwind on rollers with a vertical axis, or still walls formed by a plurality of sectors sliding with respect to one another to telescopically lengthen and shorten.

The flexible wall 41 separates the working area of the tools U with respect to the area in which the movable upright 23 moves. Thereby, the fall of machining chips on the guides 21 and partly on the guides 27 is avoided or reduced. The chips remain confined in the front area of the flexible wall 41 and are collected on a conveyor 43 (indicated schematically in Fig.4, in the form of a belt conveyor), supported by the base 9 and preferably movable with an evacuation motion parallel to the first translation axis X. As visible in Fig.4, the conveyor 43 can be housed in a cavity 9.4 made on the upper face 9.3 of the base 9. As an alternative to a belt conveyor, the chips can be removed by means of a suction conveyor, i.e., by means of a suction device placed below the working area, and possibly integrated in the base 9.

The tools U can be milling tools. In the illustrated embodiment, the spindles 31 and the tools U move along the second numerically controlled horizontal translation axis Y1 all simultaneously, being carried by a single slide 25. The possibility of providing a single slide for each spindle 31, or a plurality of slides in a number greater than one, but less than the total number of spindles 31, is not excluded. For example, two slides 25 can be provided, each carrying two spindles 31, with the possibility of independent motion of the individual slides 25 along the horizontal translation direction Y1.

To increase the number of machining operations which can be performed on the pieces P and thus to increase for example the flexibility and productivity of the numerically controlled lathe 1, an additional operating head or workhead labelled 51 is advantageously provided.

The additional workhead can comprise one or more additional spindles 53 and/or can be combined with a tool magazine and a tool changing device, not shown, to increase the working flexibility of the lathe 1. In the illustrated embodiment, the additional workhead 51 comprises two additional spindles 53 coaxial with each other for two additional tools U1, for example milling cutters or drilling tools.

The additional workhead 51 is provided with a plurality of movements according to a plurality of numerically controlled axes. In the illustrated embodiment, the additional workhead 51 is provided with a first translation motion along a third numerically controlled translation axis Z and along a fourth numerically controlled translation axis Y2.

More in particular, the motion along the third numerically controlled axis is a vertical translation motion, indicated with Z. In the illustrated embodiment, the third numerically controlled translation axis Z is parallel to the longitudinal development of the upright 23 and parallel to the lying plane of the rotation axes A of the headstocks 13 and tailstocks 15.

The fourth numerically controlled translation axis Y2 is horizontal, parallel to the direction of motion controlled by the second numerically controlled axis Y1 and orthogonal to the direction of motion controlled by the first numerically controlled translation axis X.

To perform motions along the third numerically controlled translation axis Z, the additional workhead 51 is supported on a second slide 55. In the illustrated embodiment, the second slide 55 is engaged to the movable upright 23. Thereby, the additional workhead 51 and the group of spindles 31 form a working unit, the motion whereof along the direction X, i.e., parallel to the rotation axes A of the workpieces, is controlled by a single numerically controlled axis.

In other embodiments, the additional workhead 51 can be carried by a component which is autonomous and distinct from the movable upright 23, for example by a second movable upright, which can be guided along the guides 21 integral with the base 9, or along guides separate from the guides 21. An autonomous numerically controlled translation axis will in this case be provided to control the translation motion along the direction of the axes A imparted to the additional workhead 51.

In the illustrated embodiment, the second slide 55 and the first slide 25 are engaged on two opposite flanks or sides of the movable upright 23. In the illustrated embodiment, the second slide 55 is engaged on guides 57 integral with the movable upright 23. The guides 57 extend in the direction of motion Z according to the third numerically controlled translation axis.

The additional workhead 51 is connected to the second slide 55 with the interposition of a third slide 59, movable, with respect to the second slide 55, along the direction of the fourth numerically controlled axis Y2. In the illustrated embodiment, the third slide 59 is engaged with guides 61 integral with the second slide 55 and extending in the direction Y2. The motion along the third numerically controlled translation axis Z allows the additional workhead 51 to move from one to the other of the various workpieces P, which are at different heights and vertically overlapping each other. In essence, therefore, the single additional workhead 51 can reach each of the pieces P being machined, supported by any of the headstock 13 and tailstock 15 pairs.

The motion along the fourth numerically controlled translation axis Y2 allows the additional workhead 51 to move into the working position and, if desired, to move away from the working area, in a position such that it can be located behind the wall 41. For this purpose, the second slide 55 can have a particularly long extension in the direction Y2 in the opposite direction to the working area, in which the headstocks 13 and the tailstocks 15 are located.

To further reduce the size of the additional workhead 51 with respect to the area in which the workpieces P are located, and to increase the flexibility of the lathe 1, increasing the number of degrees of freedom of the tools, in some embodiments the additional workhead 51 has a further numerically controlled axis, and more precisely a numerically controlled rotary axis, labelled C. In the illustrated embodiment, the numerically controlled rotary axis C is a vertical axis, parallel to the axis Z. The additional spindle 53, or the pair of coaxial additional spindles 53, can rotate around the numerically controlled rotary axis C to take variable inclinations. In other words, the rotation axis of the tool(s) U1 supported by the additional spindle 53 can take variable inclinations in a horizontal plane, i.e., a plane orthogonal to the rotary axis C.

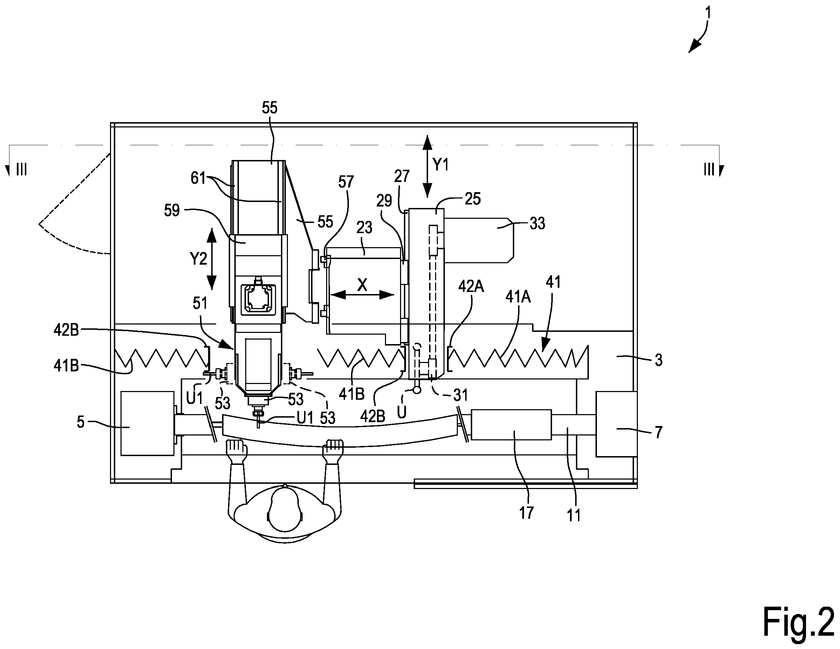

Therefore, with a rotation motion around the numerically controlled rotary axis C, the pair of additional spindles 53 and related additional tools U1 can move from a working position, indicated in solid lines in Fig.2, to a non-working position, indicated in dotted lines in Fig.2. The rotation around the numerically controlled rotary axis C also allows to set the desired inclination of the rotation axes of the additional tools U1 during the work cycle.

The motion along the numerically controlled axes Z, Y2 and C also allows additional machining to be performed with the additional tools U1 in various positions and with various orientations.

In the embodiment described above with reference to Figures 1, 2, 3, 4 and 5, the additional workhead 51 is configured with two additional coaxial spindles, or with a spindle having two coaxial tool holders. In other embodiments, a different configuration can be envisaged, for example with a single spindle, with a single tool holder, or a configuration with more than two spindles with inclined axes, for example cross-shaped.

A particularly useful modified embodiment is depicted in Fig.4A, which shows a section similar to Fig.4 with a modified additional workhead 51. In this embodiment, the additional workhead 51 carries a double arrangement of spindles, where two spindles, each with two coaxial tool holders for tools U2 and Ux, are vertically overlapping each other, i.e., in the overlapping direction of the rotation axes A-A of the workpieces. Advantageously, the two overlapping spindles, indicated in Fig.4A with 53 and 53X, are placed with a centre distance I between the rotation axes of the spindles (and thus of the tools) equal to the centre distance I between the rotation axes A of the workpieces P, axes formed by the headstocks 13 and tailstocks 15 described above.

With this arrangement, the additional workhead 51 can simultaneously machine two pieces P by carrying out identical processes thereon by means of motion of the additional spindles 53, 53X along the numerically controlled axes X, Y2, Z and C.

In further embodiments, not shown, there can be more than two additional spindles 53, 53X, up to a maximum number equal to the number of headstock 13 and tailstock 15 pairs. It is thereby possible to machine all the pieces P simultaneously with the tools fixed to the additional spindles of the additional workhead 51.

While in Fig.4A the two overlapping spindles are double spindles, i.e., with two coaxial tool holders, in other embodiments the spindles 53, 53X can be single, or multiple with a number of spindle holders greater than two and not necessarily coaxial. For example, an aggregate of spindles 53 with coplanar axes oriented at 120° (e.g., three spindle holders) or at 90° (three spindle holders or four spindle holders) can be provided.

The arrangement illustrated in Fig.4A with multiple additional workhead and overlapping spindles in the overlapping direction of the rotation axes A of the workpieces can also be used in the embodiments described below with reference to the remaining figures, even if this is not specifically illustrated in the drawings.

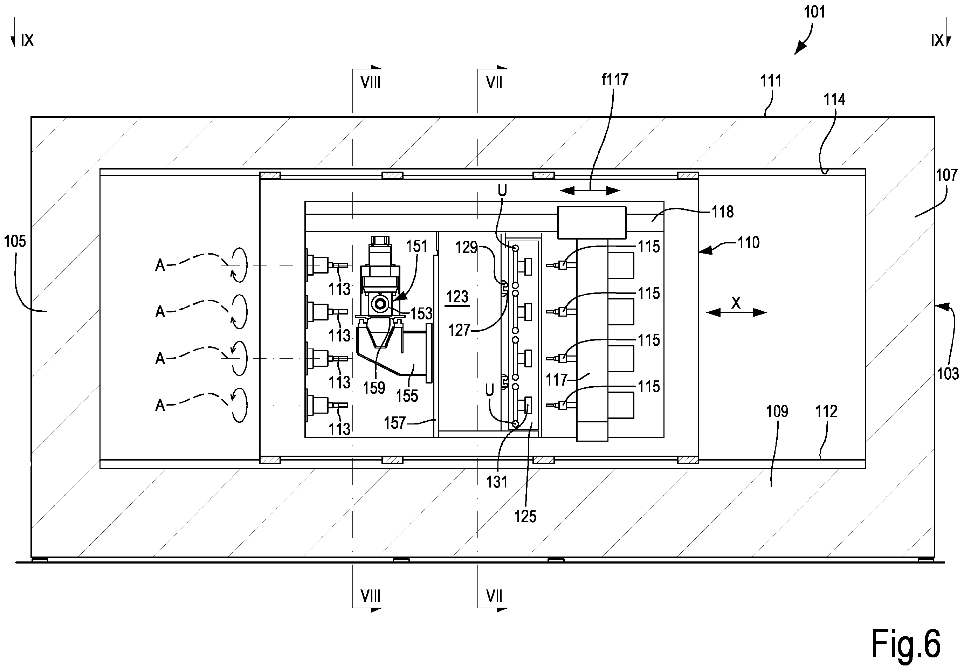

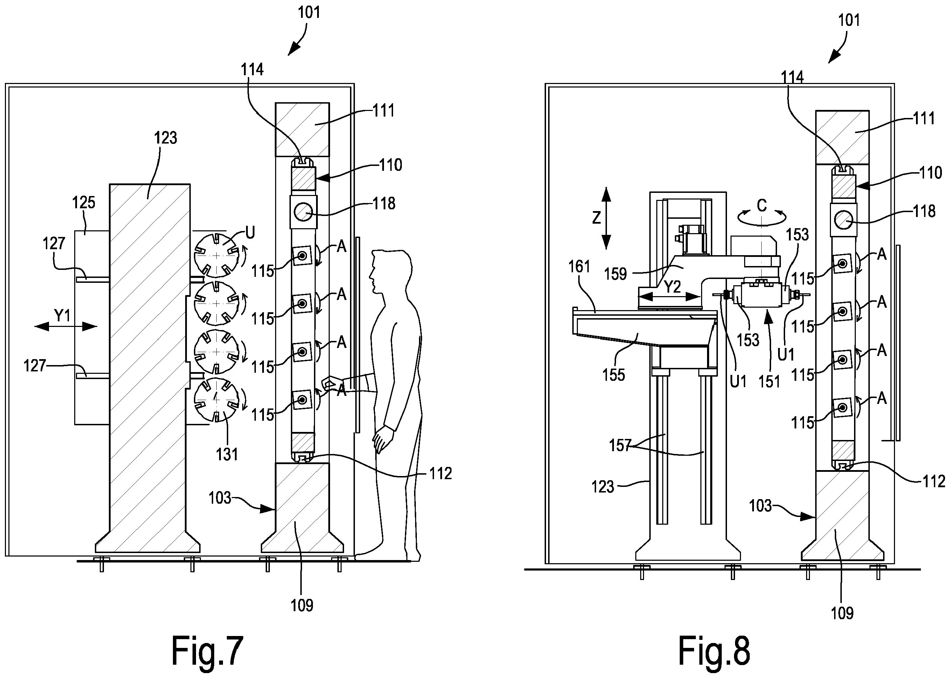

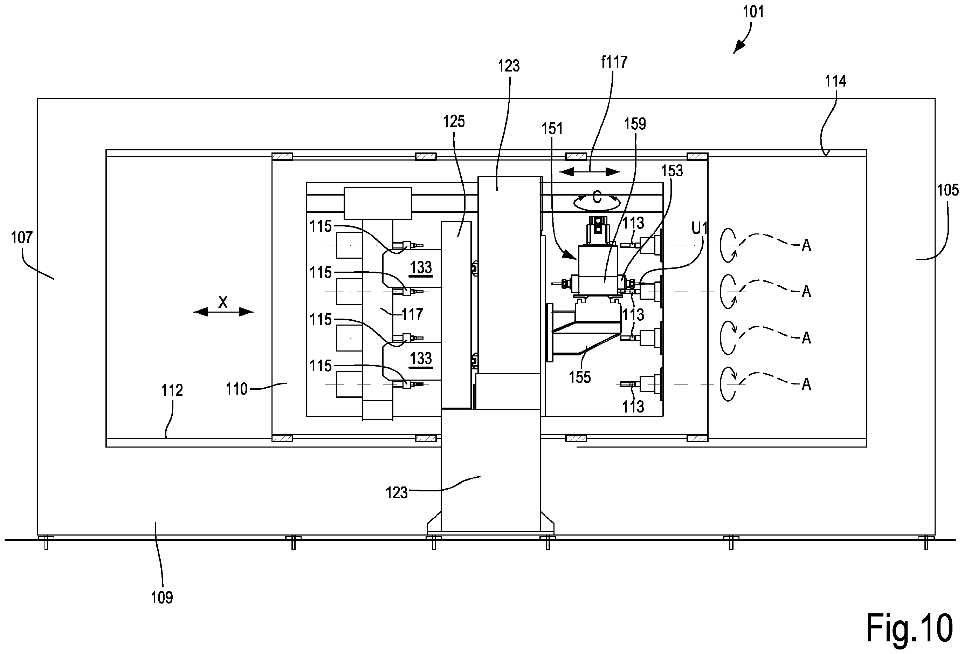

### Embodiment of Figures 6 to 10

Figures 6 to 10 illustrate a second embodiment of a numerically controlled multi-spindle lathe according to the present disclosure. Elements and parts which are equivalent or corresponding to those of the embodiment of Figures 1 to 5 are indicated with the same reference numbers, increased by "100". Therefore, in this embodiment the lathe is indicated with 101 and comprises a load-bearing structure 103. In the illustrated embodiment, the load-bearing structure 103 extends vertically and comprises a first vertical upright 5 and a second vertical upright 7, rigidly connected to a lower horizontal base 9. The uprights 105 and 107 are joined at the top by a horizontal cross member 11.

The lathe 1 comprises a plurality of pairs of turning members of workpieces P. Each pair of turning members of the workpieces comprises a headstock and a tailstock, coaxial with each other, at least one of which is motorised. The turning members are mounted on a frame 110 supported on guides 112, 114 integral with the base 109 and the cross member 111, respectively. The frame 110 is movable along a first numerically controlled translation axis indicated again by X. The double arrow X indicates, as in the embodiment of Figures 1 to 5, the direction of the translation motion controlled by the first numerically controlled axis.

In the embodiment shown in Figures 6 to 10, headstocks 113 are fixed on the frame 110 and are part of the pairs of turning members. In the illustrated embodiment, four headstocks 113 are illustrated by way of example, but their number is by way of example and not limiting. Each headstock 113 corresponds to a tailstock 115 coaxial therewith. The tailstocks 115 are carried by a slide 117 in the form of an upright, guided along guides 118, 120 integral with the frame 110. The slide in the form of an upright 117 is movable according to the double arrow f 117 to adjust the relative distance between headstocks 113 and tailstocks 117.

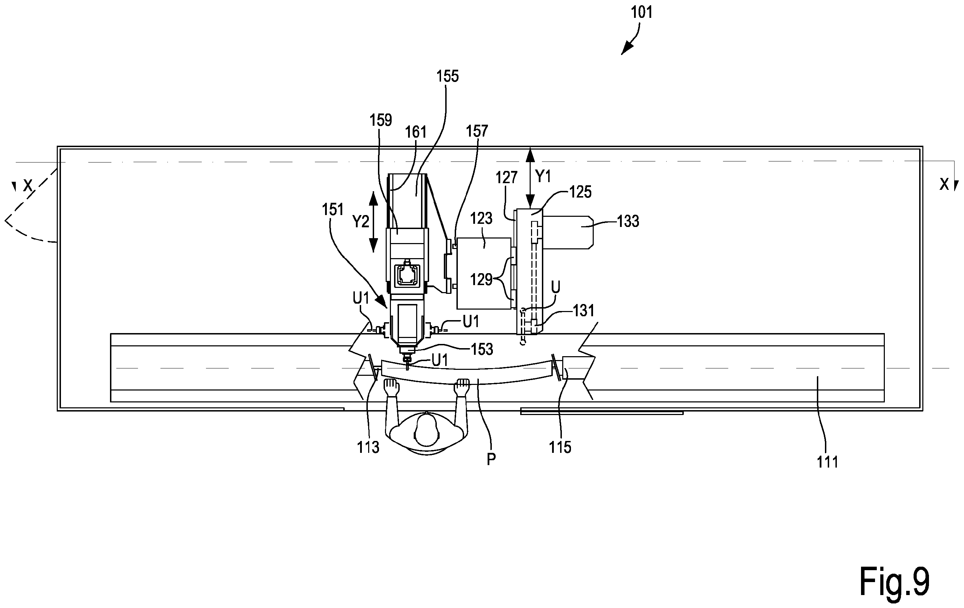

The rotation axes of the headstock and tailstock 113, 115 pairs, i.e of the support and rotation members of workpieces P, are indicated with A, (Fig.9).

Similar to the embodiment illustrated in Figures 1 to 5, also in Figures 6 to 10, the pairs of headstocks and tailstocks 113, 115 are vertically placed side by side one above the other. The rotation axes A of the pairs of headstocks 113 and tailstocks 115 are coplanar and the lying plane of the axes A is a vertical plane.

Each headstock 113 is rotated around the respective axis A by means of a numerically controlled motor, not shown. The motors of the headstocks 113 are preferably controlled so that all the headstocks 113 rotate synchronously. Thereby, a plurality of tools U carried by a plurality of spindles 131 (described in more detail hereinafter) can synchronously and simultaneously machine all the pieces P supported and rotated by the pairs of headstocks and tailstocks 113, 115. In the illustrated embodiment, the tools U, and thus the spindles 131 carrying them, rotate around axes parallel to the rotation axes A of the headstocks 113 and tailstocks 115, i.e., horizontal axes parallel to each other and vertically overlapping.

The rotation axes A of the workpieces P and the rotation axes of the tools U and the spindles 31 are parallel to a first numerically controlled translation axis X. The spindles 31 and the tools U translate under the control of the numerically controlled axis X along the direction X parallel to the axes A around which the workpieces P rotate.

In the illustrated embodiment, the rotation axes of the tools U and the spindles 31 are coplanar and lie on a vertical plane parallel to the lying plane of the rotation axes A of the workpieces P.

In the embodiment illustrated in Figures 6 to 10, contrary to what is illustrated in Figures 1 to 5, the motion along the first translation axis X is given to the pieces P and to the headstocks 113 and tailstocks 115 while the tools U do not translate in the direction X during the machining.

As described with reference to Figures 1 to 5, also in this embodiment the rotation axes of the tools U and thus of the spindles 131 carrying them, are orthogonal to a second numerically controlled translation axis Y1, along which the tools U move. In the illustrated embodiment, the second numerically controlled translation axis Y1 is orthogonal to the rotation axes A and thus to the first numerically controlled translation axis X and to the vertical lying plane of the rotation axes A of the workpieces P.

The motion of the tools U and the spindles 131 along the second numerically controlled translation axis Y1 can be controlled by means of independent actuators, one for each spindle 131. In the illustrated embodiment, the motion along the second numerically controlled translation axis Y1 is imparted simultaneously to all the spindles 131 by means of a single actuator. For this purpose, it is envisaged that all the spindles 131 are carried by a common slide, as described below.

The shape and arrangement of the spindles 131 with the respective tools U, and of the headstocks 113 and tailstocks 115 is such that machining of the pieces P occurs with the aforesaid orientation (rotation axes of the tools U parallel to the rotation axes A of the headstocks 113 and of the tailstocks 115 and thus to the rotation axes of the workpieces P). In other words, the arrangement allows the pieces and the tools to cooperate with one another while the axes A are parallel to the rotation axes of the tools U and of the spindles 131 carrying them. In other embodiments, the rotation axes of the tools U can be orthogonal to the rotation axes A of the workpieces P. In still other embodiments, the inclination of the rotation axes of the tools U and the spindles 131 can be variable, for example with a rotation around a numerically controlled rotary axis.

In the embodiment of Figures 6 to 10, in which headstocks 113 and tailstocks 115 translate according to the first numerically controlled translation axis X, the spindles 131 are carried by an upright 123 which is fixed with respect to the load-bearing structure 103 and thus to the base 109.

The fixed upright 123 carries a first carriage or slide 125, which is movable along a second translation axis represented by the double arrow Y1 under the control of the second numerically controlled translation axis Y1. The fixed upright 123 and the first slide 125 form a support structure of the spindles 131.

The direction of motion along the second numerically controlled translation axis Y1 is horizontal and orthogonal to the direction of motion along the first numerically controlled translation axis X. To allow the motion along the second numerically controlled translation axis Y1, the first slide 125 is provided with second guides 127, which in the illustrated embodiment engage in pads 129 integral with the fixed upright 123.

The spindles 131, on which the tools U can be applied, are carried on the first slide 125. In the illustrated embodiment, the number of spindles 131 and the number of tools U is equal to the number of pairs of headstocks 113 and tailstocks 115.

As mentioned previously, also in this embodiment the spindles 131 can be rotated simultaneously by means of a number of motors equal to or different than the number of spindles 131. In the illustrated example two motors 133 are provided, each of which rotates two spindles 131.

Thanks to the above-described motions along the numerically controlled translation axes X and Y1, the tools U can perform numerically controlled motions along the axis X to machine each point of the pieces P held between the headstocks 113 and the tailstocks 115. The numerically controlled motion along the translation axis Y1 allows the tools U to be approached and distanced with respect to the side surface to be turned of the pieces P held between headstocks 113 and tailstocks 115.

According to some advantageous embodiments, to obtain regular and efficient operation of the numerically controlled multi-spindle lathe 101, a protective wall 41 is provided, similar to that illustrated in Figures 1 to 5.

The tools U can be milling tools. In the illustrated embodiment, the spindles 131 and the tools U move along the second numerically controlled horizontal translation axis Y1 all simultaneously, being carried by a single slide 125. The possibility of providing a single slide for each spindle 131, or a plurality of slides in a number greater than one, but less than the total number of spindles 131, is not excluded. For example, two slides 125 can be provided, each carrying two spindles 131, with the possibility of independent motion of the individual slides 125 along the horizontal translation direction Y1.

Similarly to what is described with reference to Figures 1 a 5, to increase the number of machining operations which can be performed on the pieces P and thus to increase for example the flexibility and productivity of the numerically controlled lathe 101, an additional operating head or workhead indicated by 151 is advantageously provided. The additional workhead 151 is provided with a numerically controlled motion which allows the additional workhead 151 to reach each piece P kept in rotation between the pairs of headstocks 113 and tailstocks 115.

The additional workhead 151 can comprise one or more additional spindles 153 and/or can be combined with a tool magazine and a tool changing device, not shown, to increase the working flexibility of the lathe 1. In the illustrated embodiment, the additional workhead 151 comprises two additional spindles 153 coaxial with each other for two additional tools U1, for example milling cutters or drilling tools.

The additional workhead 151 is provided with a plurality of movements according to a plurality of numerically controlled axes. In the embodiment illustrated in Figures 6 to 10, similarly to the embodiment of Figures 1 to 5, the additional workhead 151 is provided with a first translation motion along a third numerically controlled translation axis Z and along a fourth numerically controlled translation axis Y2. The motion along the third numerically controlled axis is a vertical translation motion, indicated with the double arrow Z. In the illustrated embodiment, the third numerically controlled translation axis Z is parallel to the longitudinal development of the upright 123 and parallel to the lying plane of the rotation axes A of the headstocks 113 and tailstocks 115.

The fourth numerically controlled translation axis Y2 is horizontal, parallel to the direction of motion controlled by the second numerically controlled axis Y1 and orthogonal to the direction of motion controlled by the first numerically controlled translation axis X.

To perform motions along the third numerically controlled translation axis Z, the additional workhead 151 is supported on a second slide 155. In the illustrated embodiment, the second slide 155 is engaged to the fixed upright 123. Thereby the additional workhead 151 and the group of spindles 131 form a working unit.

In other embodiments, the additional workhead 151 can be carried a component autonomous and separate from the movable upright 23, as described below.

In the illustrated embodiment, the second slide 155 and the first slide 125 are engaged on two opposite flanks or sides of the fixed upright 123. In the illustrated embodiment, the second slide 155 is engaged on guides 157 integral with the upright 123. The guides 157 extend in the direction of motion Z according to the third numerically controlled translation axis.

The additional workhead 151 is connected to the second slide 155 with the interposition of a third slide 159, movable with respect to the second slide 155 along the direction of the fourth numerically controlled axis Y2. In the illustrated embodiment, the third slide 159 is engaged with guides 161 integral with the second slide 155 and extending in the direction Y2.

The motion along the third numerically controlled translation axis Z allows the additional workhead 151 to move from one to the other of the various workpieces P, which are at different heights and vertically overlapping each other. In essence, therefore, the single additional workhead 151 can reach each of the pieces P being machined, supported by any of the headstock 113 and tailstock 115 pairs. The motion along the fourth numerically controlled translation axis Y2 allows the additional workhead 151 to move into the working position and, if desired, to move away from the working area.

To further reduce the size of the additional workhead 151 with respect to the area in which the workpieces P are located, and to increase the flexibility of the lathe 1, increasing the number of degrees of freedom of the tools, similarly to the embodiment of the Figures 1 to 5, the additional workhead 151 has a further numerically controlled axis, and more precisely a numerically controlled rotary axis, indicated with C. The numerically controlled rotary axis C is a vertical axis, parallel to the axis Z. The additional spindle 153, or the pair of coaxial additional spindles 153, can rotate around the numerically controlled rotary axis C. With a rotation motion around the numerically controlled rotary axis C the pair of additional spindles 153 and related additional tools U1 can move from a working position, indicated in solid lines in Fig.9, to a non-working position, indicated in dotted lines in Fig.9. The rotation around the numerically controlled rotary axis C also allows to set the desired inclination of the rotation axes of the additional tools U1 during the work cycle.

The motion along the numerically controlled axes Z, Y2 and C also allows additional machining to be performed with the additional tools U1 in various positions and with various orientations.

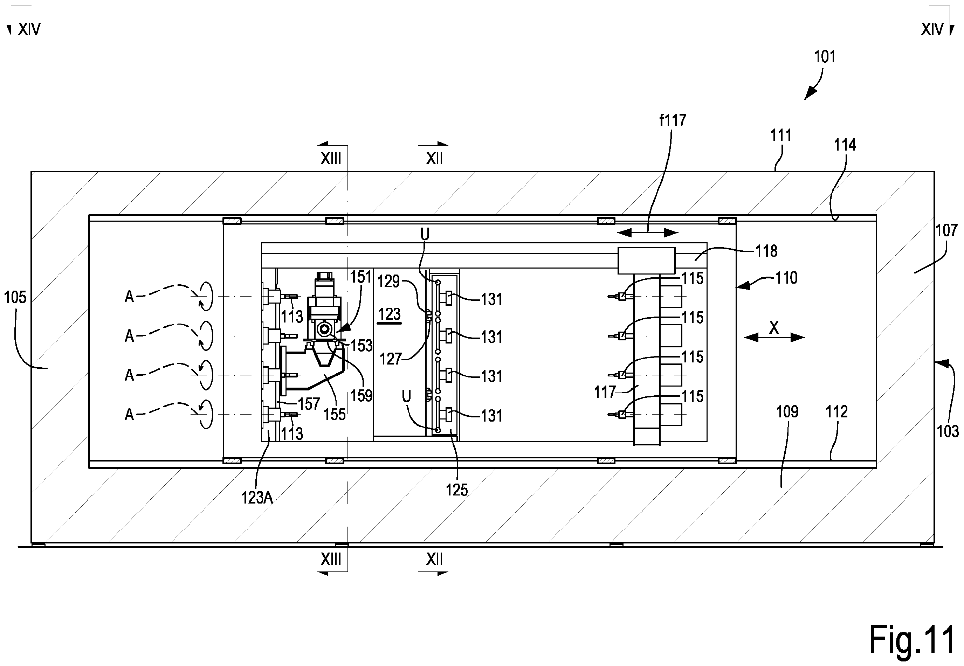

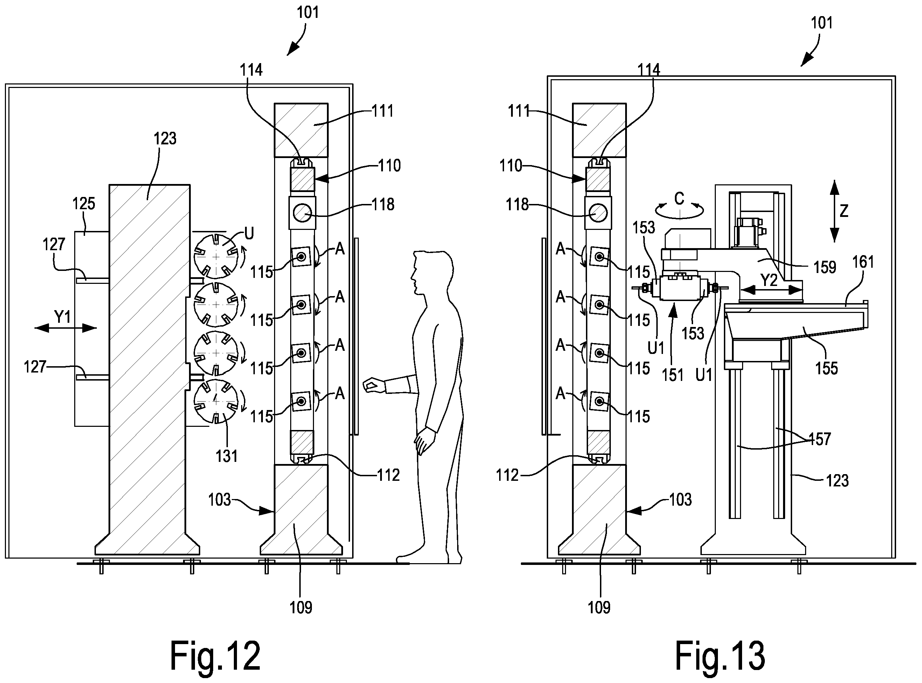

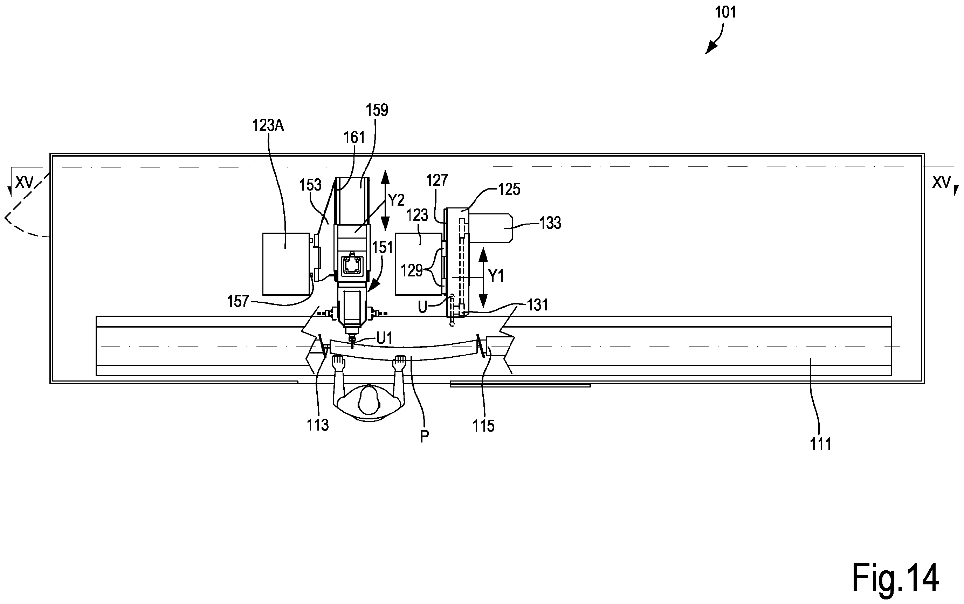

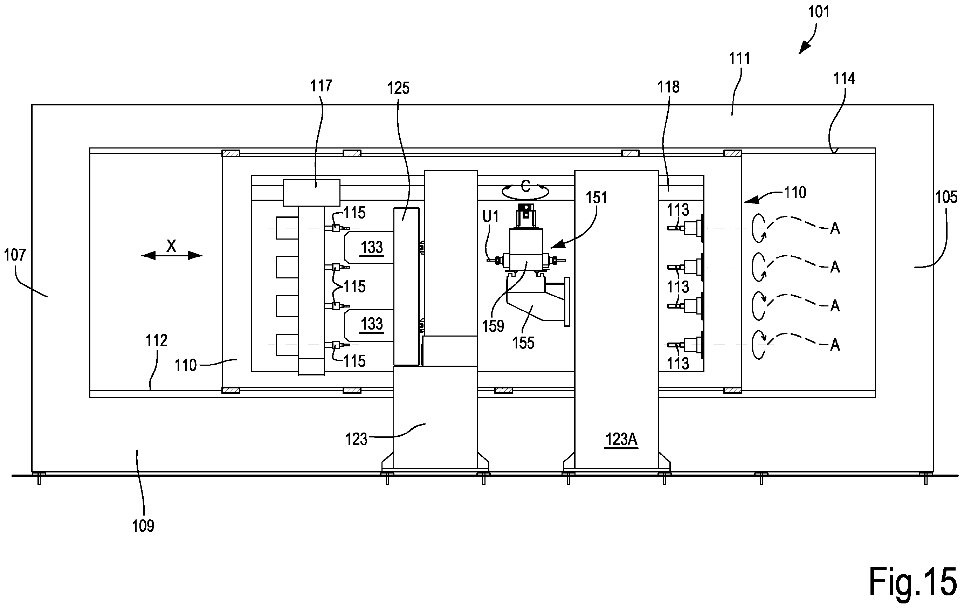

### Embodiment of Figures 11 to 15

The embodiment illustrated in Figures 11 to 15 is similar to the embodiment of Figures 6 to 10. Equal numbers indicate parts which are equal or equivalent to those described with reference to Figures 6 to 10 and which will not be described in detail again.

The main difference between Figures 6 to 10 and Figures 11 to 15 lies in the fact that in Figures 11 to 15 the second slide 155 is not carried by the fixed upright 123, but by a separate upright 123A, also stationary and placed alongside the fixed upright 123. The guides 157 are thus mounted on the second fixed upright 123A.

The two uprights 123 and 123A are located on the same side of the frame 110 which carries the headstocks 113 and the tailstocks 115.

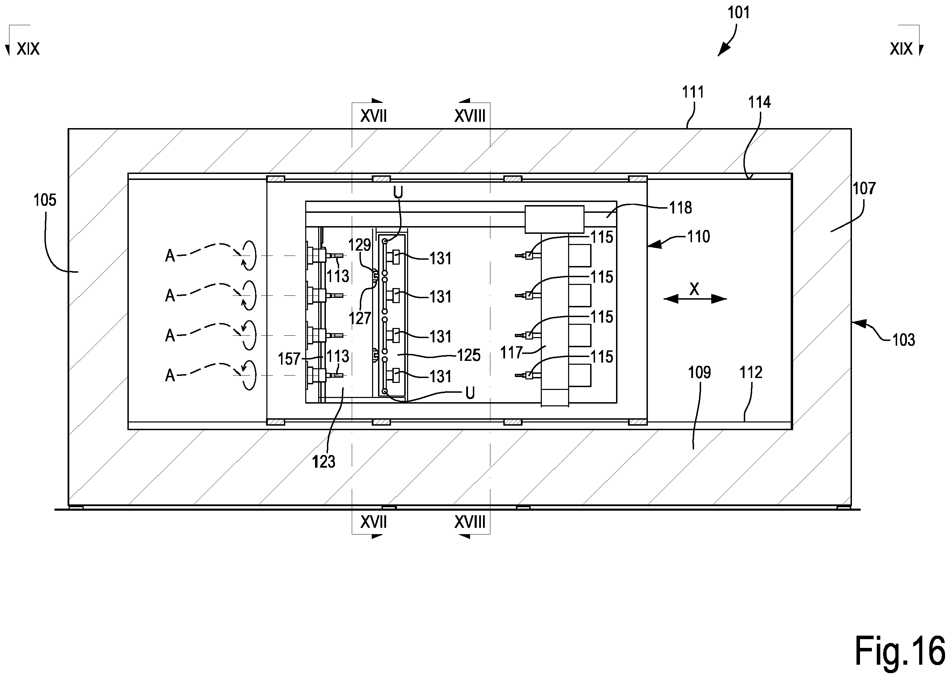

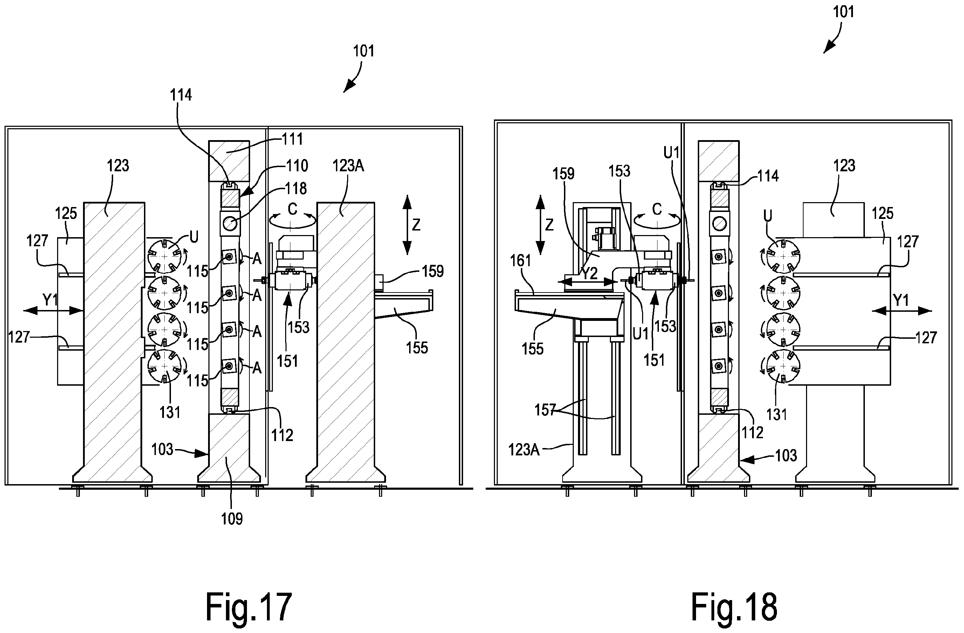

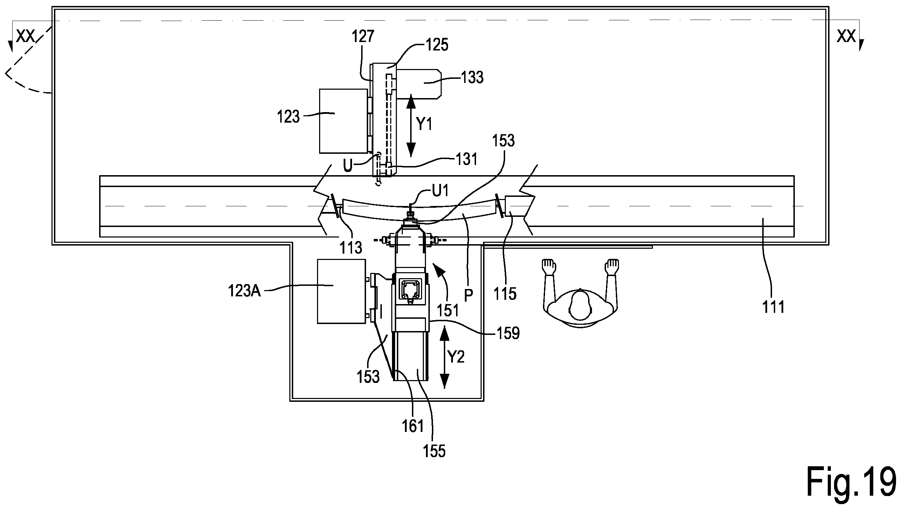

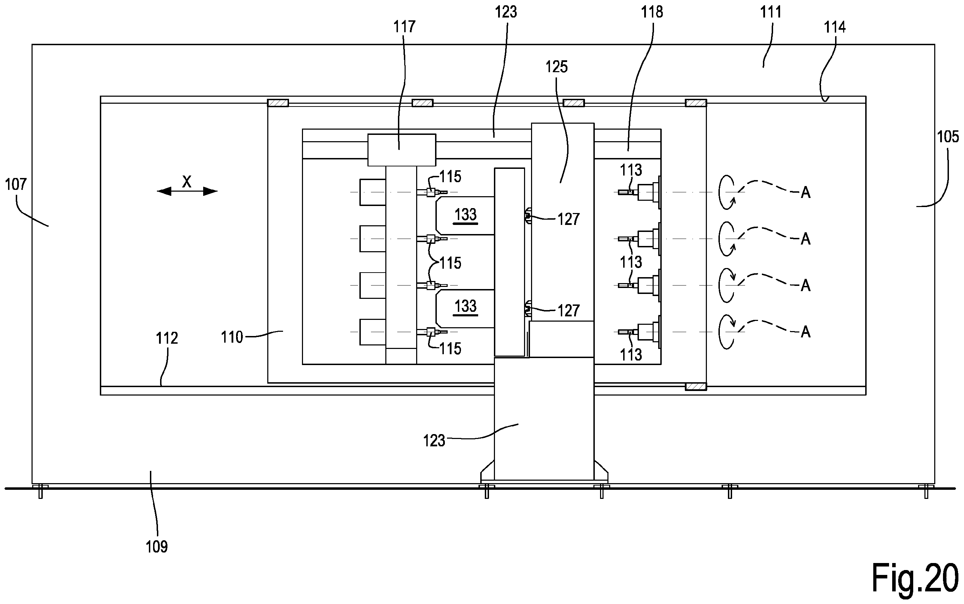

### Embodiment of Figures 16 to 20

A further embodiment of the numerically controlled multi-spindle lathe is shown in Figures 16 to 20. The embodiment illustrated in Figures 16 to 20 is similar to the embodiment of Figures 6 to 10 and Figures 11 to 15. Equal numbers indicate parts which are equal or equivalent to those described with reference to Figures 6 to 10 and 11 to 15, which will not be described in detail again.

The main difference between the embodiment of Figures 11 to 15 and the embodiment of Figures 16 to 20 lies in the fact that in the latter the two uprights 123 and 123A are located on opposite sides of the movable frame 110 carrying the headstocks 113 and the tailstocks 115.

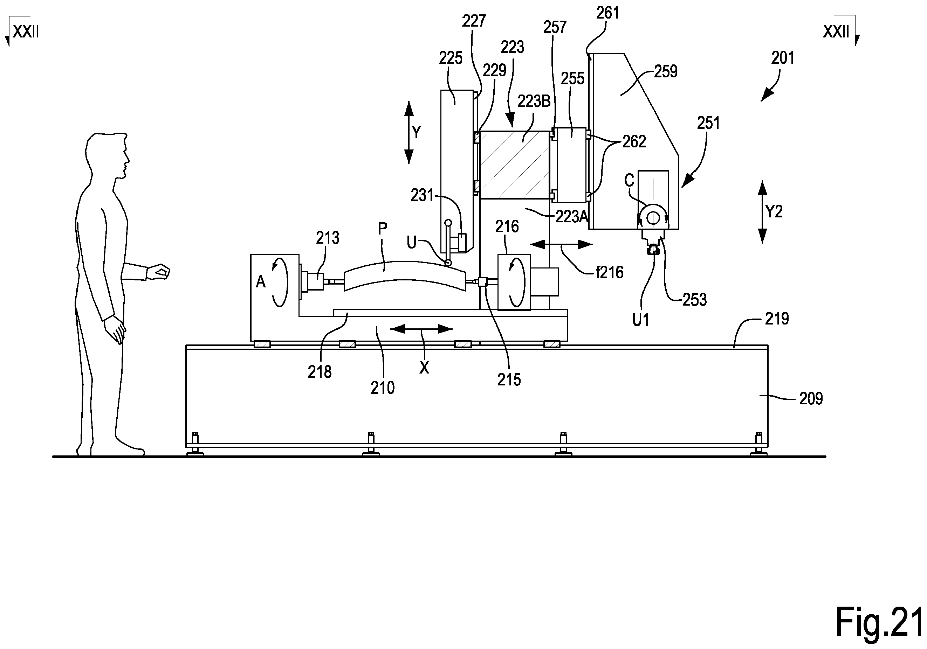

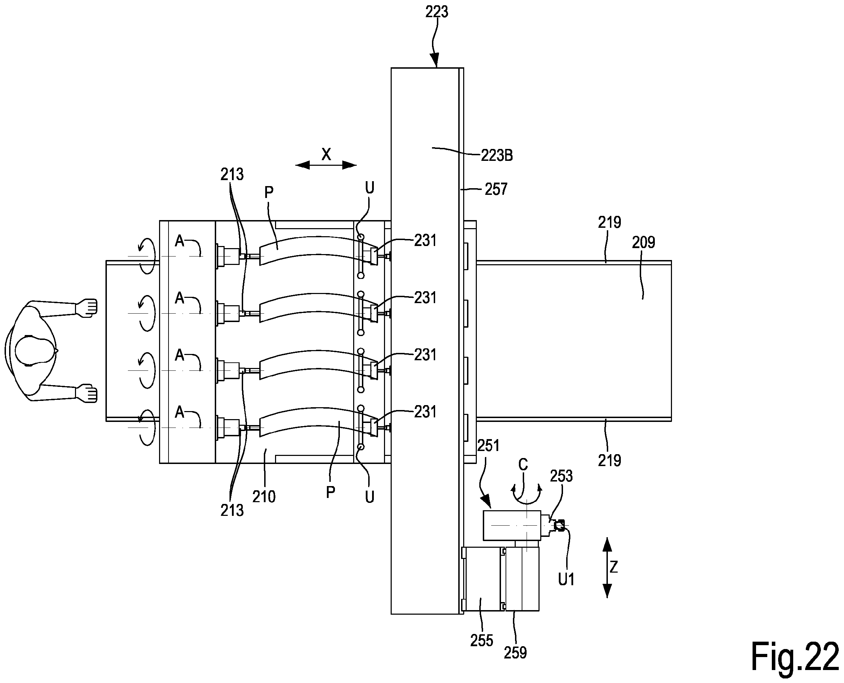

### Embodiment of Figures 21 and 22

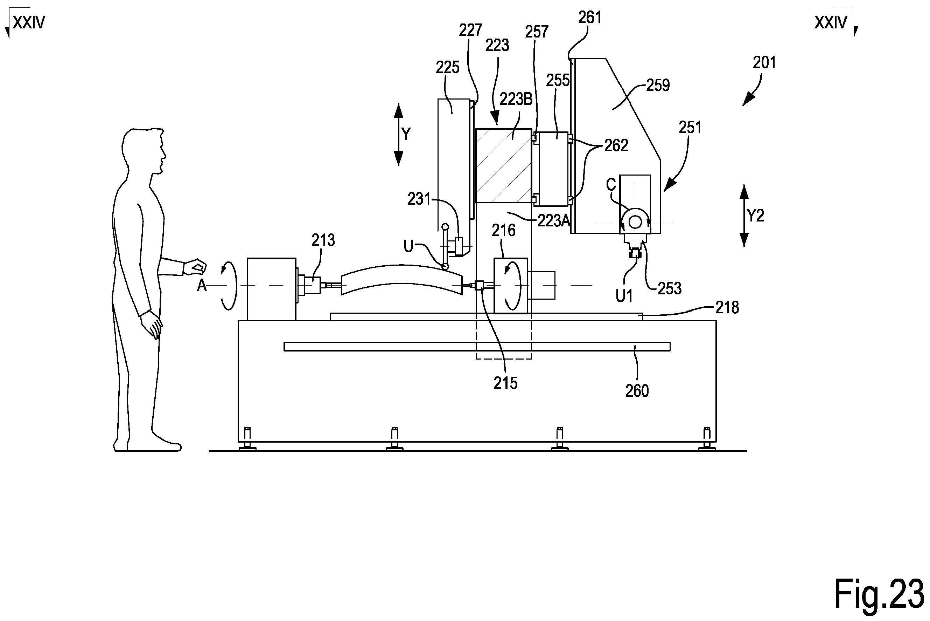

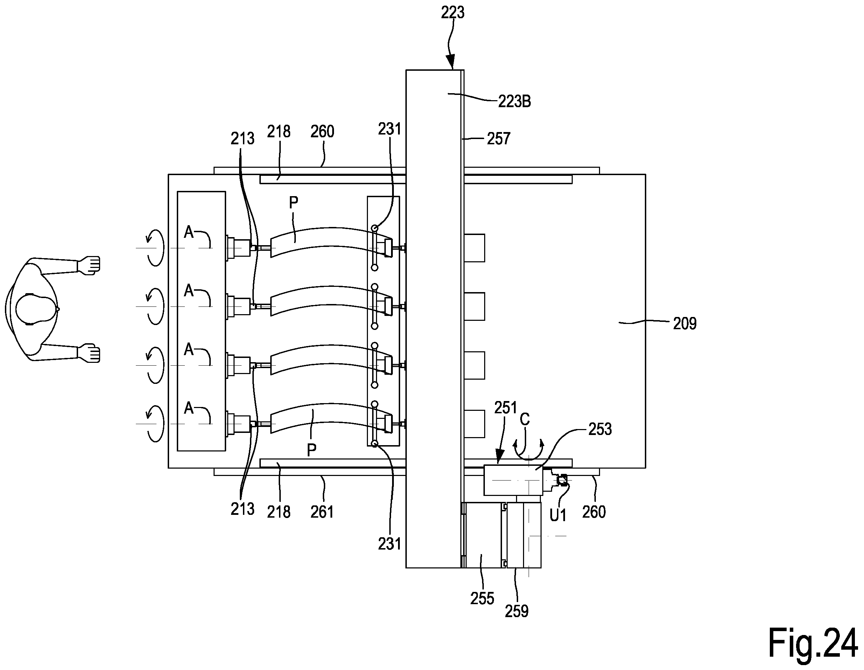

Figures 23 and 24 illustrate a further embodiment of a numerically controlled multi-spindle lathe indicated overall with 201. In this embodiment, the rotation axes of the workpieces P, defined by the headstock and tailstock pairs, lie on a horizontal rather than vertical plane and the first spindles, adapted to simultaneously machine several pieces, are carried by a support structure which is configured as a gantry, rather than as an upright.

More in particular, in the embodiment of Figures 21 and 22 the lathe 201 comprises a plurality of pairs of turning members configured to rotate workpieces (P) around respective rotation axes A which are parallel to each other. Each pair of turning members comprises a headstock 213 and a tailstock 215 which are coaxial with each other and defining the respective rotation axis A of the workpieces P. The rotation axes A of the pairs of turning members are parallel to each other and lie on a horizontal plane.

In some embodiments, the headstocks 213 are motorised and the tailstocks 215 are idle. In this embodiment, as well as in the previous ones, a reverse configuration can be envisaged, with the headstocks 213 idle and the tailstocks 215 motorised.

In the embodiment illustrated in Figures 21 and 22 the headstocks 213 and the tailstocks 215 are carried by a carriage 210 engaged to a base 209 by means of sliding guides 219. In the illustrated embodiment, the headstocks 213 are supported in a fixed position with respect to the carriage 210, while the tailstocks 215 are movable with respect to the carriage 210 to modify the distance between headstocks 213 and tailstocks 215. For this purpose, the tailstocks 215 can be carried by a slide 216 sliding on guides 218. The slide 216 is adjustable according to the direction f216 to adjust the mutual distance between headstocks 213 and tailstocks 218.

The slide 210 is movable according to a first numerically controlled translation axis X. The double arrow X indicates the motion direction controlled by the first numerically controlled axis along the longitudinal development of the base 209.

The lathe 201 comprises a support structure comprising a gantry 223 consisting of two uprights 223A and a cross member 223B. The uprights 223A and thus the cross member 223B are integral with the base 209. A first slide 225 is slidably engaged on the cross member 223B of the gantry 223, on which a plurality of spindles 231 are arranged with rotation axes parallel to each other and adapted to rotate tools U configured to machine the pieces P mounted between each pair of headstocks 213 and tailstocks 215. Sliding guides integral with the first slide 225 are indicated with 227, pads integral with the cross member 223B of the upright 223 and engaged to the guides 227 are indicated with 229. The gantry 223 and the first slide 225 form a support structure for the first spindles 231.

The assembly comprising the upright 223 and the slide 225 forms a support structure for the spindles 231. As mentioned also with reference to the previous embodiments, the possibility of using separate slides for each spindle 231 or for groups of spindles 231 is not excluded. The use of a common slide 225 allows, however, to simplify the structure of the lathe 201 and is sufficient when the spindles 231 machine all the pieces P simultaneously.

The spindles are located on the slide 231 with their rotation axes lying on a vertical plane, orthogonal to the lying plane of the rotation axes A of the workpieces P and orthogonal to the direction of motion along the first numerically controlled translation axis X.

The spindles 231 can be rotated by one or more motors, not shown, synchronously and in concordant or discordant directions, as mentioned for the previously described embodiments.

The first slide 225 is movable with respect to the gantry 223 by means of a second numerically controlled translation axis Y. The double arrow Y indicates the motion direction imparted by the second numerically controlled axis. The motion along the axis Y allows the tools U carried by the spindles 231 to be simultaneously approached and distanced with respect to the workpieces P.

Ultimately, therefore, each piece P can be turned by means of the tools 231 with a rotation motion around the respective axis A and with a double numerically controlled translation motion along the axes X and Y. During machining, the rotation axes of the spindles 231 can be parallel to the rotation axes A of the pieces P. The lathe can be free of other relative movements between tools U carried by the spindles 231 and workpieces P. The possibility of providing the spindles 231 with a rotation motion to assume inclinations other than 0° with their rotation axes with respect to the axes A is not excluded.

The lathe 201 comprises an additional workhead 251 carrying an additional spindle 253 or a group of additional spindles, for example two coaxial additional spindles. In the illustrated embodiment, the additional workhead 251 comprises a single spindle 253. A tool supported by the additional spindle 251 is indicated with U1.

The additional workhead 251 is mounted on a second slide 255 slidably engaged on guides 257 integral with the cross member 223B. The second slide 255 is movable with respect to the gantry 223 along a third translation axis Z. The double arrow Z indicates the direction of the motion performed by the second slide 255, and thus by the additional workhead 251, with respect to the gantry 223.

The motion along the direction Z of the third translation axis is a motion parallel to the lying plane of the rotation axes A of the pairs of turning members 213, 215 and parallel to the direction of motion of the first slide 225 along the second numerically controlled translation axis Y.

The stroke of the second slide 251 along the direction Z of the third translation axis is such as to allow the single additional spindle 253 (or the group of additional spindles of the additional workhead 251) to reach all the pieces P engaged in the various pairs of headstocks 213 and tailstocks 215.

To allow the tool U1 (or each tool U1) mounted on the additional spindle 253 (or on each additional spindle 253) to move towards and away from each piece P being machined along a direction orthogonal to the lying plane of the rotation axes A, a third slide 259 is interposed between the additional workhead 251 and the second slide 255, which is movable along a fourth numerically controlled translation axis Y2, parallel to the translation axis Y. For this purpose, in the illustrated embodiment the third slide 259 comprises guides 261 engaged in pads 262 integral with the second slide 255.

The numerically controlled multi-spindle lathe 201 therefore allows a plurality of pieces P to be simultaneously machined by means of the first spindles 231, keeping the pieces P rotating around the axes A and moving the spindles 231 with respect to the pieces P according to the numerically controlled translation axes X, Y. The additional spindle 253 can individually reach the individual workpieces A by moving along the numerically controlled translation axis Z and can move with respect to the individual pieces along the axis Z and along the axis X and Y2.

In some advantageous embodiments, the additional workhead 251, and thus the additional spindle(s) 253 mounted thereon can be provided with a numerically controlled rotary axis C, to rotate the additional workhead 251 around such an axis. The numerically controlled rotary axis C can be parallel to the translation axis Z and therefore parallel to the position of the rotation axes A of the workpieces, defined by the pairs of headstocks 213 and tailstocks 215. By rotating around the numerically controlled rotary axis C it is possible to modify the inclination of the rotation axis of the spindle 253 in a vertical plane and thus modify the inclination of the axis of the tools U1 with respect to the workpieces P, in a similar manner to what has been described with reference to the previous embodiments, which also have a numerically controlled rotary axis (still indicated with C), to allow this variation in inclination.

### Embodiment of Figures 23 and 24

Figures 23 and 24 illustrate a further embodiment of a numerically controlled multi-spindle lathe. The embodiment illustrated in Figures 23, 24 is similar to the embodiment of Figures 21 and 22. Equal numbers indicate equal or corresponding elements or parts in the two embodiments, which will not be described in detail again.

The embodiment illustrated in Figures 23, 24 differs from the embodiment of Figures 21, 22 mainly because the gantry 223 is movable rather than fixed and is provided with a numerically controlled motion along the numerically controlled translation axis X, while headstocks 213 and tailstocks 215 are stationary along X with respect to the base 209. The motion of the gantry 223 is obtained thanks to guides 260 on the sides of the base 209, or on the upper surface thereof. The headstocks 213 are stationary with respect to the base 209, while the tailstocks 215 can be provided with an adjustment motion of the inter-distance between headstocks 213 and tailstocks 215, obtained thanks to the fact that the tailstocks are mounted on a slide 216, movable according to the arrow f216 along adjustment guides 218, parallel to the rotation axes A of the workpieces P.

The embodiments of the numerically controlled multi-spindle lathe described above are illustrative and not limiting. The invention particularly relates to the features defined in the following clauses:
***1*.** A numerically controlled multi-spindle lathe (1; 101; 201), comprising:
   - a plurality of pairs of turning members (13, 15; 113,115; 213, 215) configured to rotate workpieces (P) around respective rotation axes (A); wherein each pair of turning members (13, 15; 113,115; 213, 215) comprises a headstock (13; 113; 213) and a tailstock (15; 115; 215) coaxial with each other and defining the respective rotation axis (A) of the workpieces (P); wherein the rotation axes of the pairs of turning members are parallel to each other; wherein each headstock (13; 113; 213) is motorised; and wherein the distance between headstocks (13; 113; 213) and tailstocks (15; 115; 215) is adjustable;
   - a first support structure (23, 25; 123, 125; 223, 225), on which a plurality of first spindles (31; 131; 231) are arranged with rotation axes parallel to each other and adapted to rotate tools (U) configured to machine pieces (P) mounted between each pair of headstocks (13; 113; 213) and tailstocks (15; 115; 215); wherein the first spindles (31; 131; 231) and the pairs of turning members are movable with respect to each other along a first numerically controlled translation axis (X) parallel to the rotation axes (A) of the pairs of turning members (13, 15; 113, 115; 213, 215);
   - an additional workhead (51; 151; 251), comprising at least one additional spindle (53; 153; 253), movable with respect to the pairs of turning members (13, 15; 113, 115; 213, 215) according to a plurality of numerically controlled axes independent of the first numerically controlled translation axis (X).
***2.*** The lathe (1; 101; 201) of clause 1, wherein the additional workhead (51; 151; 251) is provided with a translation motion along a numerically controlled translation axis (Z) orthogonal to the rotation axes (A) of the turning members (13, 15; 113, 115; 213, 215) and to the first numerically controlled translation axis (X) to bring said at least one additional spindle (51; 151; 251) into a plurality of working positions for machining pieces (P) engaged to each pair of turning members (13, 15; 113, 115; 213, 215).
***3.*** The lathe (1; 101; 201) of clause 1 or 2, wherein the additional workhead (51; 151; 251) and the turning members (13, 15; 113, 115; 213, 215) are provided with a relative motion along a numerically controlled axis (X) parallel to the rotation axes (A) of the pairs of turning members (13, 15).
***4.*** The lathe (1; 101; 201) of any of the preceding clauses, wherein the rotation axes (A) of the pairs of turning members (13, 15; 113, 115; 213, 215) are coplanar with each other; and wherein the rotation axes of the first spindles (31; 131; 231) are coplanar with each other.
***5.*** The lathe (1; 101; 201) of clause 4, wherein the additional workhead (51; 151; 251) is provided with a translation motion along a numerically controlled translation axis (Z) orthogonal to the rotation axes (A) of the turning members (13, 15; 113, 115; 213, 215) and parallel to the lying plane of the rotation axes (A) of the pairs of turning members (13, 15; 113, 115; 213, 215).
***6.*** The lathe (1; 101; 201) of one or more of the preceding clauses, wherein the additional workhead (51; 151; 251) is provided with a translation motion according to a numerically controlled axis (Y2) for approaching and distancing with respect to a lying plane of the rotation axes (A) of the pairs of turning members (13, 15; 113, 115; 213, 215).
***7.*** The lathe (1; 101) of one or more of the preceding clauses, wherein the rotation axes (A) of the pairs of turning members (13, 15; 113, 115) lie on a vertical plane and wherein the rotation axes of the first spindles (31; 131) lie on a vertical plane.
***8.*** The lathe (1; 101; 201) of one or more of the preceding clauses, wherein the rotation axes of the first spindles (31; 131; 231) are parallel to the rotation axes (A) of the pairs of turning members (13, 15; 113, 115; 213, 215).
***9.*** The lathe (1; 101; 201) of one or more of the preceding clauses, wherein the support structure (23, 25; 123, 125; 223, 225) comprises an upright (23; 123) or a gantry (223) on which the first spindles are carried (31; 131; 231).
***10.*** The lathe (1; 101; 201) of one or more of the preceding clauses, wherein the first spindles (31; 131; 231) are carried by a first slide (25; 125; 225) forming part of the first support structure.
***11.*** The lathe (1; 101; 201) of clauses 9 and 10, wherein the first slide (25; 125; 225) is supported on the upright (23; 123) or on the gantry (23) and is movable with respect to the upright (23; 123) or to the gantry (223).
***12.*** The lathe (1; 101; 201) of clause 11, wherein the first slide (25; 125; 225) is movable along a second numerically controlled translation axis (Y; Y1), orthogonal to the rotation axes (A) of the pairs of turning members (13, 15; 113, 115; 213, 215), to bring the first spindles (31; 131; 231) closer and farther away with respect to workpieces (P) engaged to the pairs of turning members (13, 15; 113, 115; 213, 215).
***13.*** The lathe (1; 101; 201) of one or more of clauses 9 to 12, wherein the upright (23; 123) or the gantry (223) is movable along the first numerically controlled translation axis (X) parallel to the axes (A) of the pairs of turning members (13, 15; 113, 115; 213, 215).
***14.*** The lathe (1; 101; 201) of clause 13, wherein the pairs of turning members (13, 15; 113, 115; 213, 215) are carried by a fixed base (9; 109; 209), on which translation guides (21; 260) of the upright (23; 123) or gantry (223) are provided, along the first numerically controlled translation axis (X).
***15.*** The lathe (101; 201) of one or more of clauses 9 to 12, wherein the upright (123) or gantry (223) is fixed; and wherein the turning members (113, 115; 213, 215) are movable along the first numerically controlled translation axis (X) parallel to the rotation axes (A) of the turning members (113, 115; 213, 215).
***16.*** The lathe (101) of clause 15, wherein the turning members (113, 115) are supported by a frame (110) movable along the first numerically controlled translation axis (X); and wherein the headstocks (113) and the tailstocks (115) of said turning members (113, 115) are mounted on the frame (110) with an adjustable mutual distance.
***17.*** The lathe (1; 101; 201) of one or more of clauses 9 to 16, wherein the additional workhead (51; 151; 251) is carried by the upright (23; 123; 123A) or by the gantry (223).
***18.*** The lathe (1; 101; 201) of clause 17, wherein the additional workhead (51; 151; 251) is carried by a second slide (55; 155; 255) supported movably on the upright (23; 123; 123A) or on the gantry (223).
***19.*** The lathe (1; 101; 201) of clause 18, wherein the second slide (55; 155; 255) is provided with a translation motion along a third numerically controlled translation axis (Z) extending according to a longitudinal development of the upright (123; 123A) or of the gantry (223), orthogonal to the rotation axes (A) of the turning members (13, 15; 113, 115; 213, 215) and to the first numerically controlled translation axis (X).
***20.*** The lathe (1; 101; 201) of clause 19, wherein the third numerically controlled translation axis (Z) is parallel to a lying plane of the rotation axes of the pairs of turning members (13, 15; 113, 115; 213, 215), said rotation axes (A) of the pairs of turning members being coplanar.
***21.*** The lathe (1; 101; 201) of clause 19 or 20, wherein the second slide (55; 155; 255) carries a third slide (61; 161; 261), interposed between the second slide (55; 155; 255) and the additional workhead (51; 151; 251), and wherein the third slide (61; 161; 261) is provided with a translation motion according to a fourth numerically controlled axis (Y2) orthogonal to the third numerically controlled translation axis (Z) and orthogonal to the rotation axes (A) of the turning members (13, 15; 113, 115; 213, 215).
***22.*** The lathe (1; 101; 201) of one or more of clauses 18 to 21, wherein the first slide (25; 125; 225) and the second slide (55; 155; 255) are located on opposite sides of the upright (23; 123) or the gantry (223).
***23.*** The lathe (1; 101; 201) of one or more of the preceding clauses, wherein the additional workhead (51; 151; 251) comprises a rotary axis (C), preferably orthogonal to a rotation axis of the first additional spindle carried by the additional workhead (53; 153; 253); wherein the rotary axis (C) is preferably orthogonal to the rotation axes (A) of the pairs of turning members (13, 15; 113, 115; 213, 215).
***24.*** The lathe (1; 101; 201) of one or more of the preceding clauses, wherein the additional workhead comprises at least two spindles with parallel rotation axes and placed at a centre distance (I) equal to the centre distance (I) between two rotation axes defined by two pairs of headstocks (13; 113; 213) and tailstocks (15; 115; 215).

## Claims

1. A numerically controlled multi-spindle lathe (1; 101; 201), comprising:
- a plurality of pairs of turning members (13, 15; 113,115; 213, 215) configured to rotate workpieces (P) around respective rotation axes (A); wherein each pair of turning members (13, 15; 113,115; 213, 215) comprises a headstock (13; 113; 213) and a tailstock (15; 115; 215) coaxial with each other and defining the respective rotation axis (A) of the workpieces (P); wherein the rotation axes of the pairs of turning members are parallel to each other; wherein each headstock (13; 113; 213) is motorised; and wherein the distance between headstocks (13; 113; 213) and tailstocks (15; 115; 215) is adjustable;
- a first support structure (23, 25; 123, 125; 223, 225), on which a plurality of first spindles (31; 131; 231) are arranged with rotation axes parallel to each other and adapted to rotate tools (U) configured to machine pieces (P) mounted between each pair of headstocks (13; 113; 213) and tailstocks (15; 115; 215); wherein the first spindles (31; 131; 231) and the pairs of turning members are movable with respect to each other along a first common numerically controlled translation axis (X), parallel to the rotation axes (A) of the pairs of turning members (13, 15; 113, 115; 213, 215), and along a second common numerically controlled translation axis (Y), orthogonal to the rotation axes (A) of the pairs of turning members, so that each spindle (31; 131; 231) works, simultaneously with the others, a respective one of said pieces (P) mounted on the pairs of headstocks (13; 113; 213) and tailstocks (15; 115; 215);
**characterized by comprising** an additional workhead (51; 151; 251), comprising at least one additional spindle (53; 153; 253) adapted to machine pieces mounted on the pairs of turning members (13, 15; 113, 115; 213, 215); wherein the additional spindle and the pairs of turning members (13, 15; 113, 115; 213, 215) are movable with respect to each other according to three numerically controlled translation axes (X, Y2, Z), and according to a numerically controlled rotary axis (C); wherein at least two (Y2, Z) of said three numerically controlled translation axes (X, Y2, Z) of the additional spindle (53; 153; 253) with respect to the pairs of turning members (13, 15; 113, 115; 213, 215) are independent of the first common numerically controlled translation axis (X) and the second common numerically controlled translation axis (Y).

2. The lathe (1; 101; 201) of claim 1, wherein the additional workhead (51; 151; 251) is provided with a translation motion along a numerically controlled translation axis (Z) orthogonal to the rotation axes (A) of the turning members (13, 15; 113, 115; 213, 215) and to the first numerically controlled translation axis (X) to bring said at least one additional spindle (51; 151; 251) into a plurality of working positions for machining pieces (P) engaged to each pair of turning members (13, 15; 113, 115; 213, 215).

3. The lathe (1; 101; 201) of claim 1 or 2, wherein the additional workhead (51; 151; 251) and the turning members (13, 15; 113, 115; 213, 215) are provided with a relative motion along a numerically controlled axis (X) parallel to the rotation axes (A) of the pairs of turning members (13, 15).

4. The lathe (1; 101; 201) of any one of the preceding claims, wherein the rotation axes (A) of the pairs of turning members (13, 15; 113, 115; 213, 215) are coplanar with each other; and wherein the rotation axes of the first spindles (31; 131; 231) are coplanar with each other.

5. The lathe (1; 101; 201) of claim 4, wherein the additional workhead (51; 151; 251) is provided with a translation motion along a numerically controlled translation axis (Z) orthogonal to the rotation axes (A) of the turning members (13, 15; 113, 115; 213, 215) and parallel to the lying plane of the rotation axes (A) of the pairs of turning members (13, 15; 113, 115; 213, 215).

6. The lathe (1; 101; 201) of one or more of the preceding claims, wherein the additional workhead (51; 151; 251) is provided with a translation motion according to a numerically controlled axis (Y2) for approaching and distancing with respect to a lying plane of the rotation axes (A) of the pairs of turning members (13, 15; 113, 115; 213, 215).

7. The lathe (1; 101) of one or more of the preceding claims, wherein the rotation axes (A) of the pairs of turning members (13, 15; 113, 115) lie on a vertical plane and wherein the rotation axes of the first spindles (31; 131) lie on a vertical plane.

8. The lathe (1; 101; 201) of one or more of the preceding claims, wherein the rotation axes of the first spindles (31; 131; 231) are parallel to the rotation axes (A) of the pairs of turning members (13, 15; 113, 115; 213, 215).

9. The lathe (1; 101; 201) of one or more of the preceding claims, wherein the support structure (23, 25; 123, 125; 223, 225) comprises an upright (23; 123) or a gantry (223) on which the first spindles are carried (31; 131; 231).

10. The lathe (1; 101; 201) of one or more of the preceding claims, wherein the first spindles (31; 131; 231) are carried by a first slide (25; 125; 225) forming part of the first support structure.

11. The lathe (1; 101; 201) of claims 9 and 10, wherein the first slide (25; 125; 225) is supported on the upright (23; 123) or on the gantry (23) and is movable with respect to the upright (23; 123) or to the gantry (223).

12. The lathe (1; 101; 201) of claim 11, wherein the first slide (25; 125; 225) is movable along a second numerically controlled translation axis (Y; Y1), orthogonal to the rotation axes (A) of the pairs of turning members (13, 15; 113, 115; 213, 215), to bring the first spindles (31; 131; 231) closer and farther away with respect to workpieces (P) engaged to the pairs of turning members (13, 15; 113, 115; 213, 215).

13. The lathe (1; 101; 201) of one or more of claims 9 to 12, wherein the upright (23; 123) or the gantry (223) is movable along the first numerically controlled translation axis (X) parallel to the axes (A) of the pairs of turning members (13, 15; 113, 115; 213, 215).

14. The lathe (1; 101; 201) of claim 13, wherein the pairs of turning members (13, 15; 113, 115; 213, 215) are carried by a fixed base (9; 109; 209), on which translation guides (21; 260) of the upright (23; 123) or gantry (223) are provided, along the first numerically controlled translation axis (X).

15. The lathe (101; 201) of one or more of claims 9 to 12, wherein the upright (123) or gantry (223) is stationary; and wherein the turning members (113, 115; 213, 215) are movable along the first numerically controlled translation axis (X) parallel to the rotation axes (A) of the turning members (113, 115; 213, 215).

16. The lathe (101) of claim 15, wherein the turning members (113, 115) are supported by a frame (110) movable along the first numerically controlled translation axis (X); and wherein the headstocks (113) and the tailstocks (115) of said turning members (113, 115) are mounted on the frame (110) with an adjustable mutual distance.

17. The lathe (1; 101; 201) of one or more of claims 9 to 16, wherein the additional workhead (51; 151; 251) is carried by the upright (23; 123; 123A) or by the gantry (223).

18. The lathe (1; 101; 201) of claim 17, wherein the additional workhead (51; 151; 251) is carried by a second slide (55; 155; 255) supported movably on the upright (23; 123; 123A) or on the gantry (223).

19. The lathe (1; 101; 201) of claim 18, wherein the second slide (55; 155; 255) is provided with a translation motion along a third numerically controlled translation axis (Z) extending according to a longitudinal development of the upright (123; 123A) or of the gantry (223), orthogonal to the rotation axes (A) of the turning members (13, 15; 113, 115; 213, 215) and to the first numerically controlled translation axis (X).

20. The lathe (1; 101; 201) of claim 19, wherein the third numerically controlled translation axis (Z) is parallel to a lying plane of the rotation axes of the pairs of turning members (13, 15; 113, 115; 213, 215), said rotation axes (A) of the pairs of turning members being coplanar.

21. The lathe (1; 101; 201) of claim 19 or 20, wherein the second slide (55; 155; 255) carries a third slide (61; 161; 261), interposed between the second slide (55; 155; 255) and the additional workhead (51; 151; 251), and wherein the third slide (61; 161; 261) is provided with a translation motion according to a fourth numerically controlled axis (Y2) orthogonal to the third numerically controlled translation axis (Z) and orthogonal to the rotation axes (A) of the turning members (13, 15; 113, 115; 213, 215).

22. The lathe (1; 101; 201) of one or more of claims 18 to 21, wherein the first slide (25; 125; 225) and the second slide (55; 155; 255) are located on opposite sides of the upright (23; 123) or the gantry (223).

23. The lathe (1; 101; 201) of one or more of the preceding claims, wherein the additional workhead comprises at least two spindles with parallel rotation axes and placed at a centre distance (I) equal to the centre distance (I) between two rotation axes defined by two pairs of headstocks (13; 113; 213) and tailstocks (15; 115; 215).
